# EUROPEAN PATENT SPECIFICATION

(11) **EP 0 594 424 B1**
(45) Date of publication and mention of the grant of the patent: **30.12.1998**
(21) Application number: 93308376.8
(22) Date of filing: 21.10.1993
(51) Int. Cl.: H01J 61/44, C09K 11/80, C09K 11/79, C09K 11/81, C09K 11/86, C09K 11/78, C09K 11/02

(54) **Fluorescent lamp with enhanced phosphor blend**
Fluoreszenzlampe mit verbesserter Phosphormischung
Lampe fluorescente avec un mélange amélioré de matière fluorescente

(30) Priority: 21.10.1992 US 964240
(43) Date of publication of application: 27.04.1994
(73) Proprietor: FLOWIL INTERNATIONAL LIGHTING (HOLDING) B.V., NL-1077 ZX Amsterdam (NL)
(72) Inventor: Pappalardo, Romano G., Sudbury, MA 01776 (US)
(74) Representative: Butler, Michael John

(56) References cited:
- EP-A- 0 199 200
- EP-A- 0 364 124
- EP-A- 0 395 775
- EP-A- 0 595 527
- WO-A-91/10715
- US-A- 4 423 349
- US-A- 4 623 816
- US-A- 5 122 710
- PATENT ABSTRACTS OF JAPAN vol. 4, no. 67 (E-11)20 May 1980 & JP-A-55 035 423 (TOSHIBA) 12 March 1980
- THE PENNSYLVANIA STATE UNIVERSITY PRESS, 1980, K.H. BUTLER " Fluorescent Lamp Phosphors "

## Description

This invention relates to a fluorescent lamp having on its interior surface a phosphor coating for converting ultraviolet radiation to visible light having a white colour, the coating comprising (i) a halophosphate phosphor and (ii) a quad phosphor blend using narrow band phosphors.

Desirable fluorescent lamp characteristics are high brightness and high colour rendering at an economical cost. To achieve this goal, such lamps as the Sylvania Octron™ and Designer™ series of lamps are constructed with two layers of phosphor coatings. The first or the base coat is an inexpensive halophosphate phosphor of the desired lamp colour temperature. The second or skin coat is comprised of three expensive rare earth activated phosphors, emitting in the red, green and blue spectral regions, blended to effect a composite white emission of desired colour temperature. In this configuration the expensive tri-phosphor blend absorbs the ultra-violet excitation energy of the Hg plasma in excess proportion to the weight of the phosphor in the lamps. The halophosphate base coat absorbs the excitation energy that eludes the skin coat, while diluting the high CRI and brightness capability of the tri-phosphor blend. Even though these phosphor blends achieve desirable economic and performance characteristics, further improvements are desirable.

In EP-A-0595527 (which is relevant only to the novelty of the present invention) there is disclosed such a lamp wherein the combination of phosphors results in a colour point between the range of 2700 to 5500 K on or near the Planckian locus, and a CRI for the lamp of at least 85, the quad phosphor blend comprising :
a) a first, green colour emitting phosphor component having a peak emission between 500 and 570 nm;
b) a second, blue colour emitting phosphor component having a peak emission between 430 and 490 nm;
c) a third, red colour emitting phosphor component having a peak emission between 590 and 630 nm; and
d) a fourth phosphor component which is distinct from the first, second and third phosphor components.

With the embodiments of such an arrangement disclosed in EP-A-0595527 it is possible to obtain a CRI for the lamp which is greater than the individual CRI values exhibited by the halophosphate phosphor or the quad phosphor blend.

In EP-A-0595527 there is disclosed the use of a Sylvania™ type #2194 phosphor (Ba Mg:Aluminate: Eu; Mn) or Sylvania™ type #2288 (Zinc ortho-silicate: Mn) as the fourth phosphor component which have principal emission peaks at about 515 nm and 528 nm, respectively. The present invention concerns the use of a different fourth phosphor component.

US-A-4,623,816 relates to a fluorescent lamp utilizing a dual phosphor layer coating having a conventional calcium haloapatite phosphor and a top phosphor layer comprising a tri-phosphor blend including a lanthanum cerium orthophosphate phosphor activated with terbium ion as the green colour component along with an europium-activated yttrium oxide phosphor as the red colour component.

US-A-4,797,594 relates to a fluorescent reprographic lamp having a phosphor layer disposed on and coextensive with a reflector layer and a protective coating over at least the portion of the inner surface of the lamp envelope not covered with the reflector layer. The phosphor layer comprises particles of green-emitting zinc orthosilcate phosphor which are individually coated with a non-particulate, conformal aluminum oxide coating.

A skin coat or tri-phosphor blend that has been used is a red Y₂O₃:Eu⁺³ (Sylvania Type 2342), a green CeMgAl₁₁O₁₉:Tb⁺³ (Sylvania Type 2297), and a blue BaMg₂Al₁₆O₂₇:Eu⁺². Another Sylvania™ lamp is the Lite White De-Luxe (LWX) which is a blend of lamp phosphors, Sylvania Types #1246, #2293, and #2345. These phosphors, respectively, have the general composition of barium aluminate activated with europium, magnesium hexa-aluminate activated with cerium and terbium, and yttrium oxide activated with europium. Fluorescent lamps utilizing the above skin coats have achieved high colour rendering and high brightness while demonstrating excellent durability in the harsh environment of the fluorescent lamp. However, additional and further improvements are desirable. Especially desirable is the production of a blend which produces efficient white colour emission and improved colour rendition at an even more economical cost.

The luminous efficacy, colour rendering index and other lamp output characteristics may be varied depending upon the particular composition of the lamp phosphors utilized. Certain terms as used in this specification have meanings which are generally accepted in the lighting industry. These terms are described in the IES LIGHTING HANDBOOK, Reference Volume, 1984, Illuminating Engineering Society of North America. The colour rendering index of light source (CRI) is a measure of the degree of colour shift objects undergo when illuminated by the light source as compared with the colour of those same objects when illuminated by a reference source of comparable colour temperature. The CRI rating consists of a General Index, Ra, based on a set of eight test-colour samples that have been found adequate to cover the colour gamut. The colour appearance of a lamp is described by its chromaticity coordinates which can be calculated from the spectral power distribution according to standard methods. See CIE, Method of measuring and specifying colour rendering properties of light sources (2nd ed.), Publ. CIE No. 13.2 (TC-3,2), Bureau Central de Ia CIE, Paris, 1974. The CIE standard chromaticity diagram includes the colour points of black body radiators at various temperatures. The locus of blackbody chromaticities on the x,y-diagram is known as the Planckian locus. Any emitting source represented by a point on this locus may be specified by a colour temperature. A point near but not on this Planckian locus has a correlated colour temperature (CCT) because lines can be drawn from such points to intersect the Planckian locus at this colour temperature such that all points look to the average human eye as having nearly the same colour. Luminous efficacy of a source of light is the quotient of the total luminous flux emitted by the total lamp power input as expressed in lumens per watt (LPW or lm/W).

The colour rendering properties of light sources in general, and of fluorescent lamps in particular, are condensed in a single parameter, the general colour-rendering index. For fundamental psychological reasons, connected with the energy detecting mode and the wavelength discriminating mode of operation of the human eye, the CRI and brightness of light sources are mutually conflicting properties, in the sense that they cannot be simultaneously optimized. Within these basic constraints, there is opportunity for relative optimization of CRI and brightness by judicious blending of phosphors. For example, in all rare earth triphosphor blends relatively high levels of both CRI and brightness are achieved. It is desirable to achieve even further improvements to the CRI without sacrificing brightness.

According to a first aspect of the present invention, there is provided a fluorescent lamp having on its interior surface a phosphor coating for converting ultraviolet radiation to visible light having a white colour, the coating comprising (i) a halophosphate phosphor and (ii) a quad phosphor blend using four narrow band phosphors, wherein the combination of phosphors results in a colour point from 2700 to 5500 K on or near the Planckian locus, and a CRI for the lamp of at least 85, the quad phosphor blend comprising :
a) a first, green colour emitting phosphor component having a peak emission between 500 and 570 nm;
b) a second, blue colour emitting phosphor component having a peak emission between 430 and 490 nm;
c) a third, red colour emitting phosphor component having a peak emission between 590 and 630 nm; and
d) a fourth phosphor component which is distinct from the first, second and third phosphor components;
characterised in that the fourth phosphor component has a peak emission between 500 and 510 nm.

The fourth phosphor component of the quad-phosphor blend is present in an amount sufficient to increase the CRI of a blend comprising the first, second and third phosphor components while minimizing a decrease in brightness due to the presence of the fourth phosphor component. Preferably the fourth component of the quad-phosphor blend comprises an alkaline earth metal activated blue/green emitting phosphor. The most preferred phosphor is manganese activated magnesium gallate which is available as Sylvania™ type #213 phosphor. This has a principal emission band with a peak at 504 nm and a half width of 32 nm (see lines 3 to 4, page 52 of "Fluorescent Lamp Phosphors" by Keith H. Butler; 1980 ISBN 0-271-00219-0).

Preferably the quad phosphor blend comprises:
a) a first, green colour emitting phosphor component selected from the group consisting of Tb-Ce activated magnesium aluminate, Eu-Mn activated barium aluminate, Tb-Ce activated yttrium silicate, and Tb-Ce activated lanthanum orthophosphate;
b) a second, blue colour emitting phosphor component selected from the group consisting of Eu activated barium magnesium aluminate, Eu activated strontium chlorophosphate, and Eu activated strontium barium calcium chlorophosphate;
c) a third, red colour emitting phosphor component selected from the group comprising Eu activated gadolinium oxide and Eu activated yttrium oxide; and
d) a fourth phosphor component which is manganese activated magnesium gallate.

The two blends of lamp phosphors are preferably applied to the interior of the lamp as two separate layers, one on top of the other.

Viewed from another aspect, the present invention provides a quad-phosphor blend suitable for use in such a fluorescent lamp comprising:
a) a first, green colour emitting phosphor component selected from the group consisting of Tb-Ce activated magnesium aluminate, Eu-Mn activated barium aluminate, Tb-Ce activated yttrium silicate, and Tb-Ce activated lanthanum orthophosphate;
b) a second, blue colour emitting phosphor component selected from the group consisting of Eu activated barium magnesium aluminate, Eu activated strontium chlorophosphate, and Eu activated strontium barium calcium chlorophosphate;
c) a third, red colour emitting phosphor component selected from the group comprising Eu activated gadolinium oxide and Eu activated yttrium oxide; and
d) a fourth phosphor component which is manganese activated magnesium gallate.

It is known from EP-A-0395775 to provide a fluorescent lamp which comprises narrow band red and green phosphor components and an additional blue phosphor component which has a relatively broad emission band of 50 nm or more. The illustrated examples of the blue phosphor component have emission band half widths ranging from 93 to 170 nm. In certain embodiments, the blend may include two or more of these wide band emitting blue phosphor components whose broad emission peaks are at approximately the same wavelength (the illustrated blue phosphor components have peaks in the wavelength range of 480 to 493 nm). In US-A-5,122,710 there is disclosed a quad-phosphor blend for a fluorescent lamp in which all the phosphor components are rare earth narrow band phosphors. In particular, this document mentions that the CRI of a standard tri-phosphor rare earth blend having output energy peaks in the blue (453 nm), green (541 nm) and red (611 nm) colour ranges can be improved by adding a fourth rare earth phosphor with a peak wavelength at about 480 nm. Neither of these documents discloses a lamp having a halophosphate and a quad phosphor blend.

An embodiment of the present invention will now be discussed by way of example only, and with reference to the accompanying drawings, in which:
FIGURE 1 shows a perspective view partially sectioned of a low pressure mercury discharge fluorescent lamp construction utilizing a dual layer phosphor coating;
FIGURE 2 shows a x-y chromaticity diagram according to the 1931 standard showing spectroradiometrically determined assignments according to the ANSI Colourimetric Standard C78.3768-1966 for fluorescent lamps (See IES LIGHTING HANDBOOK, pg. 5-15, Fifth Edition, Illuminating Engineering Society, (1972); and
FIGURE 3 graphically illustrates the Gaussian peak position on the x axis, lamp lumens on one y axis, and the CRI on the other y axis.

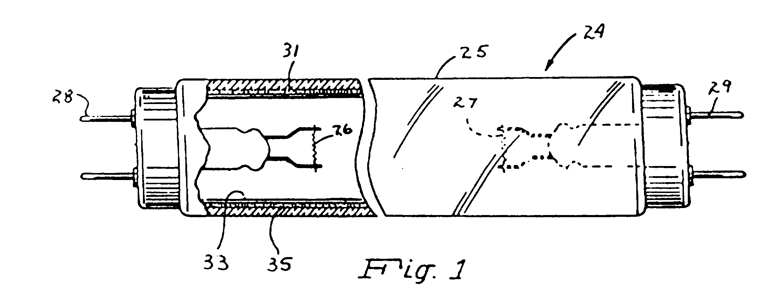

Referring to FIG. 1, there is shown a fluorescent lamp 24 containing a phosphor excitable to fluorescence. The lamp 24 comprises a tubular, hermetically sealed, glass envelope 25. Electrodes 26 and 27 are sealed in the ends of envelope 25. Suitable terminals 28 and 29 are connected to the electrodes 26 and 27 and project from envelope 25. The electrodes 26 and 27 extend through glass presses in mount stems to the terminals 28 and 29.

The interior of the tube is filled with an inert gas such as argon or a mixture of argon and neon or krypton at a low pressure, for example 266 Pa (2 torr), and a small quantity of mercury, at least enough to provide a low vapour pressure during operation. A plasma generating and sustaining medium such as one or more inert gases and mercury is included within envelope 25 so that ultraviolet radiation is produced in the interior of the glass envelope during lamp operation. A phosphor coating 31 on the interior surface of the glass envelope converts the emitted ultraviolet radiation to visible illumination having a white colour.

FIG. 1 shows a phosphor coating incorporated in a lamp. The coating illustrated at 33 comprises a quad blend of four phosphors. Although dual phosphor layers are shown in FIG. 1, the quad blend of the present invention may be utilized as a single coat.

In FIG. 1, the dual layer comprises a first layer 35 deposited on the inner glass surface and a second phosphor layer or top layer 33 deposited on the first phosphor layer 35. The use of a dual phosphor layer permits the weight of phosphor utilized in the second or top coat to be reduced and a less expensive phosphor to be utilized as the first layer 35. The first layer 35 comprises a halophosphate phosphor, preferably finely divided fluorescent calcium haloapatite phosphor exhibiting the desired white colour point. The second layer or top layer 35 comprises a quad phosphor blend on the inside of the tube so that a substantial portion of the ultraviolet radiation is instantly converted to visible illumination having a white colour. The relative proportions of the components in the blend are such that an enhanced colour rendering index is produced as compared to a tri-component blends formed from a three phosphor component blend consisting of a single green component.

The first layer or inner coating typically comprises a halogenated alkaline earth phosphate with the activator element being lead, manganese, antimony or tin. The host has the apatite structure, a typical example being calcium chlorophosphate 3Ca₃(PO₄)₂·CaCl₂. Many modifications are possible including partial substitutions of the alkaline earth cations by other divalent metals such as zinc and cadmium. Also, partial substitutions of the chloride by fluoride ions is desirable for some applications.

Phosphor materials which result from these combinations generally exhibit good luminescence when stimulated by short (253.7 nanometers) ultraviolet radiation, the response being greatest when the materials are synthesized to produce small deviations from stoichiometry. In particular, activation by combinations of antimony and manganese will produce a wide spectrum of luminescent emissions from alkaline earth phosphates excited by ultraviolet light. Thus, these phosphors have wide application in fluorescent lamps and may be adjusted in composition to provide white light which varies from "cool" to "warm" white. Typical phosphors are "Warm White", Sylvania™ Type 4300 and "Cool White", Sylvania™ Type 4450. Although the above calcium chlorophosphate phosphors are economical, improvements to colour rendering and efficacy is desirable.

The quad-phosphor blend comprises a blend of three phosphor components having a predetermined CRI and exhibiting a characteristic spectral power distribution and quantum yield. The components comprise a first green emitting phosphor component having a visible emission spectrum principally in the 500 to 570 nm wavelength range. A second blue colour emitting phosphor component has an emission spectrum principally in the 430 to 490 nm wavelength range. A third red colour emitting phosphor component has an emission spectrum principally in the 590 to 630 nm wavelength range. A fourth phosphor component has a principal Gaussian peak in the region of 500 to 510 nm. The fourth phosphor component is present in an amount sufficient to increase the CRI of a blend comprising the first, second, and third phosphor components while minimizing a decrease in brightness due to the presence of the fourth phosphor component.

The relative proportions of the components of the quad-phosphor blend light generating media are such that when their emissions are blended, the combination of phosphors result in a predetermined colour point from about 2700 to 5500 K, preferably 2700 to 4200 K, on or near the Planckian locus. The x and y values of ICI coordinates wherein the x value is in the range of 0.3 to 0.45, and said y value is in the range of 0.3 to 0.45. Additionally, the relative proportions of the components are such that an enhanced colour rendering index is produced as compared to a tri-component blend formed from a three phosphor component blend consisting of single components of green, red and blue emitting phosphor components.

Two-coat lamps which include blends in accordance with embodiments of the present invention as the second layer, exhibit increased CRI values when compared with lamps made with only the narrow band rare earth activated phosphor components in the second layer of phosphor.

Generally, because of their spectral properties, the preferred phosphors for the initial green, red, and blue phosphor components are rare earth activated phosphors.

Typical green colour rare earth activated phosphors comprise Tb-Ce activated magnesium aluminate, Eu-Mn activated barium aluminate, Tb-Ce activated yttrium silicate, and Tb-Ce activated lanthanum orthophosphate. A preferred Tb-Ce activated magnesium aluminate is available as a magnesium hexa-aluminate as Sylvania™ Type #2293. A preferred Eu-Mn activated barium aluminate is Sylvania™ Type #2194 having the formula BaMg₂Al₁₆O₂₇:Eu⁺²,Mn. A Tb-Ce activated lanthanum orthophosphate having the formula LaPO₄:Ce,Tb. In US-A-4,423,349 the terbium-activated lanthanum cerium phosphor is used as a lower cost substitute for the terbium and cerium co-activated magnesium aluminate phosphor component in a blend. The structural formula is LaₓTb_{y}Ce_{z}PO₄, where x+y+z=1; x is greater than 0.05 and less than 0.35, y is greater than 0.05 and less than 0.3, and z is greater than 0.6 and less than 0.9. This type of phosphor is commercially available from Nichia company as Type NP220 phosphor. A corresponding Sylvania™ phosphor is Type 2211, LaPO₄:Ce,Tb, known as LAP.

The second phosphor component is a blue colour emitting phosphor, preferably a rare earth activated narrow-band emitting phosphor. Typical blue emitting phosphors are europium activated barium magnesium aluminate, europium activated strontium chlorophosphate, and europium activated strontium barium calcium chlorophosphate. The preferred blue emitting phosphor is a barium magnesium aluminate activated by divalent europium and having a peak emission at 455 nm; such a phosphor having the formula BaMg₂Al₁₆O₂₇:Eu⁺² is available as Sylvania™ Type 2461 or Type 246.

The third phosphor component is a preferably a rare earth red colour emitting phosphor. Typical red emitting phosphors are activated by trivalent europium. Preferred red emitting phosphors are europium activated gadolinium oxide (Gd₂O₃:Eu⁺³) and europium activated yttrium oxide (Y₂O₃:Eu⁺³). A most preferred red emitting phosphor is the yttrium oxide activated by trivalent europium having a peak emission at 611 nm and available as Sylvania™ Type 2342 or Type 2345.

The amount of the fourth phosphor component incorporated into the initial phosphor blend is in an amount sufficient to desirably increase the CRI of the initial three component blend while minimizing any decrease in brightness. The resulting lamp incorporating the four component phosphor blend has a CRI greater than 85 and even more preferably greater than 87 with a corresponding loss in brightness at less than 10 percent, and preferably less than 7 percent.

In accordance with embodiments of the present invention, the fourth phosphor component has a principal Gaussian peak in the blue-green emitting region of 500 nm to 510 nm. The fourth phosphor is necessarily a different phosphor than the first, second or third phosphor initially utilized so as to result in an enhanced CRI for the final phosphor blend.

Preferred non-rare earth phosphors are alkaline earth metal activated phosphors, of which magnesium gallate is most preferred. Sylvania™ Type #213 is a manganese activated magnesium gallate.

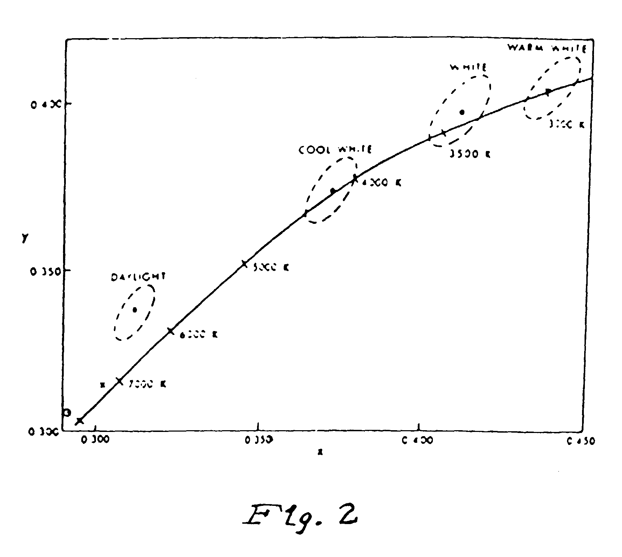

FIG. 2 illustrates an x-y chromaticity diagram showing the placement of the standard fluorescent colours of cool white, white, and warm white on a standard chromaticity diagram. A fluorescent lamp according to embodiments of the present invention is defined as the region of white light of correlated colour temperature from 2700 Kelvin to 5500 Kelvin with colour points that fall a distance less than or equal to 0.0054 from the Black Body locus (in the 1960 UCS u-v diagram). FIG. 2 illustrates, in the CIE 1931 standard colourimetric observer x-y chromaticity diagram, the range of white light emitting lamp colours that can be produced with blends of a quad blend of lamp phosphors.

The phosphor layers are applied by techniques known in the art. The first layer of phosphor such as, for example, a calcium halophosphate activated by antimony and manganese is coated as a layer directly adjacent the glass from a liquid suspension. A phosphor coating suspension is prepared by dispersing the phosphor particles in a water-based system employing polyethylene oxide and hydroxyethyl cellulose as the binders with water as the solvent. The phosphor suspension is applied by causing the suspension to flow down the inner surface of the bulb. Evaporation of the water results in an insoluble layer of phosphor particles adhering to the inside surface of the bulb wall. The first layer is then dried prior to overcoating with the quad phosphor blend. The desired second phosphor layer is similarly applied from a water based suspension containing the appropriate and desired blend of phosphors. The second water base suspension containing the quad blend is allowed to flow over the first layer until the liquid is drained from the tube.

The following Example is given to enable those skilled in this art to more clearly understand and practice the present invention.

The phosphor numbers given in the Example below have identifying numbers utilized by GTE Products Corporation, Towanda, Pa., and are known as "Sylvania™" phosphors.

Given the spectral power distribution (SPD) from a lamp incorporating a given phosphor blend, for example the Sylvania™ Lite White DeLuxe (LWX) blend, the rearranging of the spectral distribution has an effect on CRI and brightness. To this effect, the SPD was transformed from watt/nm to photons/nm units. The resulting photon spectral curve was redistributed to produce: 1) a curve of the same spectral shape as the original one, but of reduced overall area, about 90 percent; and, 2) the remaining 10 percent photons were bunched together into a gaussian band. This mathematical manipulation corresponds to mixing the original blend with another phosphor exhibiting a Gaussian emission band, and with the same quantum yield for emission as the original blend.

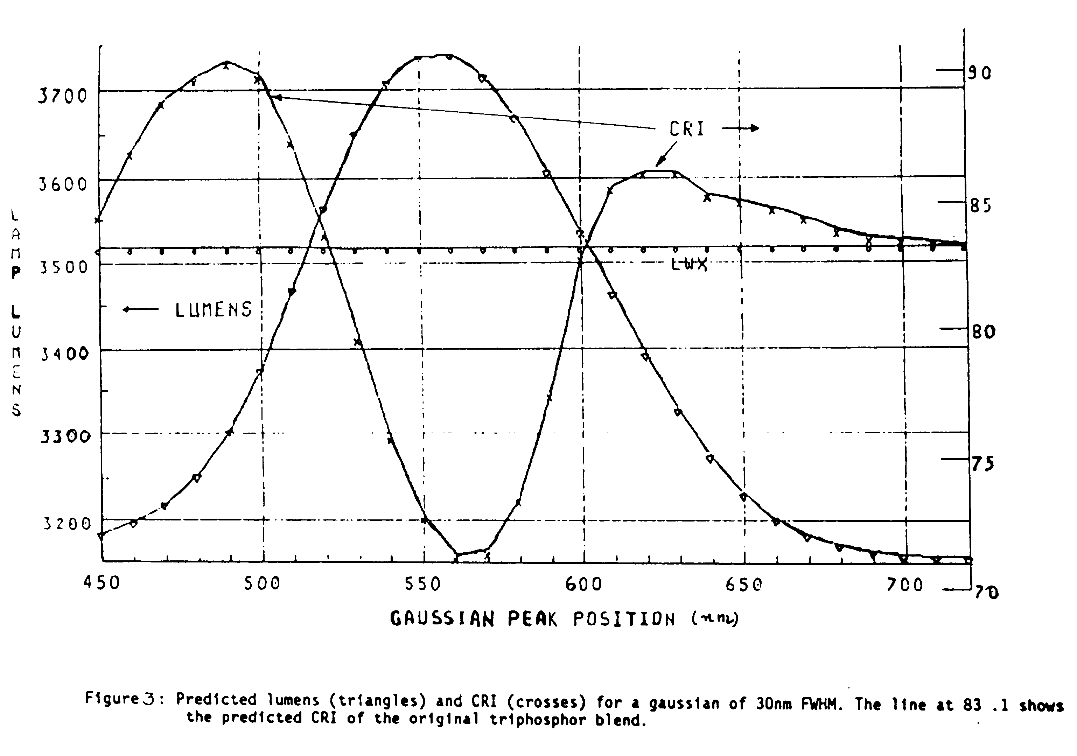

The reduced intensity SPD and the ad-hoc Gaussian are reconverted to watt/nm units, and the photometric and colourimetric properties of the resulting blend are calculated, as the peak position and width of the Gaussian are varied. Selected results, namely CRI and predicted lumens from such blends, are collected in Figure 3, for the realistic assumption of 30nm full-width at half maximum (FWHM) for the Gaussian band.

As the Gaussian peak spans the visible spectral region, the predicted CRI and lumen output show complementary trends (Figure 3). It is also evident that CRI values of about 90 may result when the Gaussian peak is located in the green spectral region at about 500 nm. Another region of enhanced CRI, over the value for the original blend (indicated in Figure 1 by the dotted horizontal line) occurs when the peak of the Gaussian is moved to the red spectral region at about 630 nm.

The procedure described so far will generally lead to a blend colour-point shifted from that of the original SPD. However, the procedure is useful in revealing the spectral regions where an additional blend component should emit, in order to produce a higher CRI.

On the basis of the results of Figure 3, a commercial phosphor with an emission in the blue-green spectral region was selected as a CRI-enhancing fourth component additive to the original Sylvania™ Lite White DeLuxe (LWX) blend. The fourth phosphor component selected was Sylvania™ phosphor Type 213 (Mg gallate:Mn), as a suitable additive to raise the CRI of the original LWX blend.

In the second stage of the computation, the SPD of the single-phosphor lamps, coated respectively with Type 213, and with the components of the LWX lamp (Sylvania™ Types 246, 2293 and 2345) were combined to provide a field with the colour coordinates of the LWX lamp. Prediction on the brightness of the resulting blends were based on the 100-hour lumen output of the single-component lamps, as listed in Table 1.

**TABLE 1**

| Phosphor Type | Lumens | Colour Emission |
|---|---|---|
| #246 | 1006 | blue |
| #2293 | 4372 | green |
| #2345 | 2750 | red |
| #213 | 2400 | blue green |

In the derivation of the properties of the four component blends, the individual SPD's were treated as independently varying arrays, using a mathematical formalism developed for the treatment of four-component phosphor blends. Partial results of this modelling are shown in Table 2. It should be noted that by the addition of 0.127 single-lamp fractions (SLF) of the phosphor #213, and by changing the relative content of the remaining blend components with respect to the original LWX blend, the CRI can be raised from 83.1 to 89.1, at a small loss in brightness, from about 3460 lumens about 3230 lumens which is less than a seven percent drop in brightness.

**TABLE 2**

| PREDICTED LUMENS AND CRI FROM FOUR COMPONENT BLENDS WITH TYPES #246, #2293, #2345, AND #213 FOR THE LWX Colour POINT | | | | | |
|---|---|---|---|---|---|
| Single-Lamp Fractions of | | | | CRI | Lumens |
| #246 | #2293 | #2345 | #213 | | |
| 0.134 | 0.476 | 0.389 | 0.0 | 83.1 | 3460 |
| 0.127 | 0.440 | 0.393 | 0.040 | 85.7 | 3387 |
| 0.119 | 0.401 | 0.396 | 0.082 | 87.9 | 3309 |
| 0.117 | 0.391 | 0.397 | 0.094 | 88.4 | 3288 |
| 0.115 | 0.383 | 0.399 | 0.102 | 88.7 | 3273 |
| 0.115 | 0.38 | 0.398 | 0.105 | 88.8 | 3267 |
| 0.110 | 0.36 | 0.400 | 0.127 | 89.1 | 3227 |
| 0.10 | 0.318 | 0.405 | 0.17 | 88.3 | 3147 |

## Claims

1. A fluorescent lamp having on its interior surface a phosphor coating for converting ultraviolet radiation to visible light having a white colour, the coating comprising (i) a halophosphate phosphor and (ii) a quad phosphor blend using four narrow band phosphors, wherein the combination of phosphors results in a colour point from 2700 to 5500 K on or near the Planckian locus, and a CRI for the lamp of at least 85, the quad phosphor blend comprising :
a) a first, green colour emitting phosphor component having a peak emission between 500 and 570 nm;
b) a second, blue colour emitting phosphor component having a peak emission between 430 and 490 nm;
c) a third, red colour emitting phosphor component having a peak emission between 590 and 630 nm; and
d) a fourth, phosphor component which is distinct from the first, second and third phosphor components;
characterised in that the fourth phosphor component has a peak emission between 500 and 510 nm.

2. A lamp as claimed in claim 1, characterised in that the first, green colour emitting phosphor component is selected from the group consisting of Tb-Ce activated magnesium aluminate, Eu-Mn activated barium aluminate, Tb-Ce activated yttrium silicate, and Tb-Ce activated lanthanum orthophosphate.

3. A lamp as claimed in claim 1 or 2, characterised in that the second, blue colour emitting phosphor component is selected from the group consisting of Eu activated barium magnesium aluminate, Eu activated strontium chlorophosphate, and Eu activated strontium barium calcium chlorophosphate.

4. A lamp as claimed in any preceding claim,
characterised in that the third, red colour emitting phosphor component is selected from the group comprising Eu activated gadolinium oxide and Eu activated yttrium oxide.

5. A lamp as claimed in any preceding claim,
characterised in that the fourth phosphor component is an alkaline earth phosphor.

6. A lamp as claimed in claim 5, characterised in that the fourth phosphor component is manganese activated magnesium gallate.

7. A lamp as claimed in any preceding claim, characterised in that the fourth phosphor component is present in the quad phosphor blend in a single lamp fraction of between 0.040 and 0.17.

8. A lamp as claimed in any preceding claim, characterised in that the halophosphate phosphor comprises a calcium haloapatite phosphor.

9. A fluorescent lamp as claimed in any preceding claim, wherein said CRI is greater than 87.

10. A fluorescent lamp as claimed in any preceding claim, wherein said combination of phosphors result in a colour point from 2700 to 4200 K on or near the Planckian locus.

11. A fluorescent lamp as claimed in any preceding claim wherein the ICI coordinates of the visible light have an x value in the range of 0.3 to 0.45, and a y value in the range of 0.3 to 0.45.

12. A fluorescent lamp as claimed in any preceding claim wherein said quad phosphor blend produces light with colour points that fall a distance less than or equal to 0.0054 from the Black Body locus (in the 1960 UCS u-v diagram).

13. A fluorescent lamp as claimed in claim 1, characterised in that the quad phosphor blend comprises:
a) a first, green colour emitting phosphor component selected from the group consisting of Tb-Ce activated magnesium aluminate, Eu-Mn activated barium aluminate, Tb-Ce activated yttrium silicate, and Tb-Ce activated lanthanum orthophosphate;
b) a second, blue colour emitting phosphor component selected from the group consisting of Eu activated barium magnesium aluminate, Eu activated strontium chlorophosphate, and Eu activated strontium barium calcium chlorophosphate;
c) a third, red colour emitting phosphor component selected from the group comprising Eu activated gadolinium oxide and Eu activated yttrium oxide; and
d) a fourth, blue/green colour emitting phosphor component which is manganese activated magnesium gallate.

14. A quad phosphor blend suitable for use in a fluorescent lamp as claimed in claim 13, comprising:
a) a first, green colour emitting phosphor component selected from the group consisting of Tb-Ce activated magnesium aluminate, Eu-Mn activated barium aluminate, Tb-Ce activated yttrium silicate, and Tb-Ce activated lanthanum orthophosphate;
b) a second, blue colour emitting phosphor component selected from the group consisting of Eu activated barium magnesium aluminate, Eu activated strontium chlorophosphate, and Eu activated strontium barium calcium chlorophosphate;
c) a third, red colour emitting phosphor component selected from the group comprising Eu activated gadolinium oxide and Eu activated yttrium oxide; and
d) a fourth phosphor component; characterised in that the fourth phosphor component is manganese activated magnesium gallate.

## Patentansprüche

1. Leuchtstofflampe, welche auf ihrer Innenfläche eine Leuchtstoffschicht für die Umwandlung ultravioletter Strahlung in sichtbares Licht von weißer Farbe aufweist, wobei die Schicht (i) einen Halophosphatleuchtstoff und (ii) eine Vierfachleuchtstoffmischung umfaßt, die vier Schmalbandleuchtstoffe verwendet, wobei die Kombination aus Leuchtstoffen in einem Farbpunkt von 2700 bis 5500 K auf oder nahe dem Planck'schen Kurvenzug resultiert, sowie in einem CRI der Lampe von zumindest 85, und wobei die Vierfachleuchtstoffmischung besteht aus:
a)
einer ersten, die Farbe Grün emittierenden Leuchtstoffkomponente mit einer Spitzenemission zwischen 500 und 570 nm;
b)
einer zweiten, die Farbe Blau emittierenden Leuchtstoffkomponente mit einer Spitzenemission zwischen 430 und 490 nm;
c)
einer dritten, die Farbe Rot emittierenden Leuchtstoffkomponente mit einer Spitzenemission zwischen 590 und 630 nm; und
d)
einer vierten Leuchtstoffkomponente, die sich von der ersten, der zweiten und der dritten Leuchtstoffkomponente unterscheidet,
dadurch **gekennzeichnet**, daß die vierte Leuchtstoffkomponente eine Spitzenemission zwischen 500 und 510 nm aufweist.

2. Lampe nach Anspruch 1, dadurch **gekennzeichnet**, daß die erste, die Farbe Grün emittierende Leuchtstoffkomponente aus der Gruppe ausgewählt ist, die aus Tb-Ce-aktiviertem Magnesiumaluminat, aus Eu-Mn-aktiviertem Bariumaluminat, aus Tb-Ce-aktiviertem Yttriumsilikat und aus Tb-Ce-aktiviertem Lanthan-Orthophosphat besteht.

3. Lampe nach Anspruch 1 oder 2, dadurch **gekennzeichnet**, daß die zweite, die Farbe Blau emittierende Leuchtstoffkomponente aus der Gruppe ausgewählt ist, die aus Eu-aktiviertem Bariummagnesiumaluminat, aus Eu-aktiviertem Strontiumchlorophosphat und aus Eu-aktiviertem Strontium-Barium-Kalzium-Chlorophosphat besteht.

4. Lampe nach irgendeinem der vorhergehenden Ansprüche, dadurch **gekennzeichnet**, daß die dritte, die Farbe Rot emittierende Leuchtstoffkomponente aus der Gruppe ausgewählt ist, die aus Eu-aktiviertem Gadoliniumoxid und aus Eu-aktiviertem Yttriumoxid besteht.

5. Lampe nach irgendeinem der vorhergehenden Ansprüche, dadurch **gekennzeichnet**, daß die vierte Leuchtstoffkomponente ein alkalischer Erdleuchtstoff ist.

6. Lampe nach Anspruch 5, dadurch **gekennzeichnet**, daß die vierte Leuchtstoffkomponente manganaktiviertes Magnesiumgallat ist.

7. Lampe nach irgendeinem der vorhergehenden Ansprüche, dadurch **gekennzeichnet**, daß die vierte Leuchtstoffkomponente in der Vierfachleuchtstoffmischung in einer einzigen Lampenfraktion von zwischen 0,040 und 0,17 vorhanden ist.

8. Lampe nach irgendeinem der vorhergehenden Ansprüche, dadurch **gekennzeichnet**, daß der Halophosphatleuchtstoff ein Kalzium-Haloapatit-Leuchtstoff ist.

9. Leuchtstofflampe nach irgendeinem der vorhergehenden Ansprüche, bei welcher der CRI größer als 87 ist.

10. Leuchstofflampe nach irgendeinem der vorhergehenden Ansprüche, bei welcher die Leuchtstoffkombination in einem Farbpunkt von 2700 bis 4200 K auf oder nahe dem Planck'schen Kurvenzug resultiert.

11. Leuchtstofflampe nach irgendeinem der vorhergehenden Ansprüche, bei welcher die ICI-Koordinaten des sichtbaren Lichts einen x-Wert im Bereich von 0,3 bis 0,45 und einen y-Wert im Bereich von 0,3 bis 0,45 besitzen.

12. Leuchtstofflampe nach irgendeinem der vorhergehenden Ansprüche, bei welcher die Vierfachleuchtstoffmischung Licht mit Farbpunkten erzeugt, die in einen Abstand vom Schwarzkörper-Kurvenzug (in dem 1960-UCS u-v-Diagramm) fallen, der kleiner oder gleich 0,0054 ist.

13. Leuchtstofflampe nach Anspruch 1, dadurch **gekennzeichnet**, daß die Vierfachleuchtstoffmischung umfaßt:
a)
eine erste, die Farbe Grün emittierende Leuchstoffkomponente, die aus der Gruppe ausgewählt ist, die aus Tb-Ce-aktiviertem Magnesiumaluminat, aus Eu-Mn-aktiviertem Bariumaluminat, aus Tb-Ce-aktiviertem Yttriumsilikat und aus Tb-Ce-aktiviertem Lanthan-Orthophosphat besteht;
b)
eine zweite, die Farbe Blau emittierende Leuchtstoffkomponente, die aus der Gruppe ausgewählt ist, die aus Eu-aktiviertem Bariummagnesiumaluminat, aus Eu-aktiviertem Strontiumchlorophosphat und aus Eu-aktiviertem Strontium-Barium-Kalzium-Chlorophosphat besteht;
c)
eine dritte, die Farbe Rot emittierende Leuchtstoffkomponente, die aus der Gruppe ausgewählt ist, die aus Eu-aktiviertem Gadoliniumoxid und Eu-aktiviertem Yttriumoxid besteht; und
d)
eine vierte, die Farbe Blau-Grün emittierende Leuchtstoffkomponente, die aus manganaktiviertem Magnesiumgallat besteht.

14. Vierfachleuchtstoffmischung, die zur Verwendung in einer Leuchtstofflampe nach Anspruch 13 geeignet ist, bestehend aus:
a)
einer ersten, die Farbe Grün emittierenden Leuchstoffkomponente, die aus der Gruppe ausgewählt ist, die aus Tb-Ce-aktiviertem Magnesiumaluminat, aus Eu-Mn-aktiviertem Bariumaluminat, aus Tb-Ce-aktiviertem Yttriumsilikat und aus Tb-Ce-aktiviertem Lanthan-Orthophosphat besteht;
b)
einer zweiten, die Farbe Blau emittierenden Leuchtstoffkomponente, die aus der Gruppe ausgewählt ist, die aus Eu-aktiviertem Bariummagnesiumaluminat, aus Eu-aktiviertem Strontiumchlorophosphat und aus Eu-aktiviertem Strontium-Barium-Kalzium-Chlorophosphat besteht;
c)
einer dritten, die Farbe Rot emittierenden Leuchtstoffkomponente, die aus der Gruppe ausgewählt ist, die aus Eu-aktiviertem Gadoliniumoxid und aus Eu-aktiviertem Yttriumoxid besteht; und
d)
einer vierten Leuchstoffkomponente,
dadurch **gekennzeichnet**, daß die vierte Leuchstoffkomponente manganaktiviertes Magnesiumgallat ist.

## Revendications

1. Lampe fluorescente ayant, sur sa paroi intérieure, un revêtement de luminophores pour convertir un rayonnement ultraviolet en une lumière visible présentant une couleur blanche, le revêtement comprenant (i) un luminophore d'halophosphate et (ii) un mélange de quatre luminophores utilisant quatre luminophores de bande étroite, combinaison des luminophores dont il résulte un point de couleur entre 2700 et 5500 K sur ou proche du lieu de Planck, et un indice de rendu des couleurs pour la lampe d'au moins 85, le mélange des quatre luminophores comprenant :
a) un premier composant de luminophore émettant une couleur verte et ayant une crête d'émission comprise entre 500 et 750 nm ;
b) un deuxième composant de luminophore émettant une couleur bleue et ayant une crête d'émission comprise entre 430 et 490 nm ;
c) un troisième composant de luminophore émettant une couleur rouge et ayant une crête d'émission comprise entre 590 et 630 nm ; et
d) un quatrième composant de luminophore qui est différent des premier, deuxième et troisième composants de luminophore ;
**caractérisée en ce que**
le quatrième composant de luminophore présente une crête d'émission comprise entre 500 et 510 nm.

2. Lampe selon la revendication 1, caractérisée en ce que le premier composant de luminophore émettant une couleur verte est choisi dans le groupe comprenant l'aluminate de magnésium activé par Tb-Ce, l'aluminate de baryum activé par Eu-Mn, le silicate d'yttrium activé par Tb-Ce, et l'orthophosphate de lanthane activé par Tb-Ce.

3. Lampe selon la revendication 1 ou 2, caractérisée en ce que le deuxième composant de luminophore émettant une couleur bleue est choisi dans le groupe comprenant l'aluminate de magnésium baryum activé par Eu, le chlorophosphate de strontium activé par Eu, et le chlorophosphate de calcium baryum strontium activé par Eu.

4. Lampe selon l'une quelconque des revendications précédentes, caractérisée en ce que le troisième composant de luminophore émettant une couleur rouge est choisi dans le groupe comprenant l'oxyde de gadolinium activé par Eu et l'oxyde d'yttrium activé par Eu.

5. Lampe selon l'une quelconque des revendications précédentes, caractérisée en ce que le quatrième composant de luminophore est un luminophore de terre alcaline.

6. Lampe selon la revendication 5, caractérisée en ce que le quatrième composant de luminophore est du gallate de magnésium activé par du manganèse.

7. Lampe selon l'une quelconque des revendications précédentes, caractérisée en ce que le quatrième composant de luminophore est présent dans le mélange des quatre luminophores dans une unique fraction de lampe comprise entre 0,040 et 0,17.

8. Lampe selon l'une quelconque des revendications précédentes, caractérisée en ce que le luminophore d'halophosphate est un luminophore d'haloapatite de calcium.

9. Lampe fluorescente selon l'une quelconque des revendications précédentes, dans laquelle le dit indice de rendu des couleurs est supérieur à 87.

10. Lampe fluorescente selon l'une quelconque des revendications précédentes, dans laquelle la dite combinaison de luminophores apporte un point de couleur compris entre 2700 et 4200 K sur le lieu de Planck ou à proximité de celui-ci.

11. Lampe fluorescente selon l'une quelconque des revendications précédentes, dans laquelle les coordonnées ICI de la lumière visible présente une valeur x comprise entre 0,3 et 0,45, et une valeur y comprise entre 0,3 et 0,45.

12. Lampe fluorescente selon l'une quelconque des revendications précédentes, dans laquelle le dit mélange de quatre luminophores produit une lumière ayant des points de couleur qui tombent à une distance inférieure ou égale à 0,0054 du lieu du corps noir -"Black Body Locus"- (dans le diagramme u-v d'UCS de 1960).

13. Lampe fluorescente selon la revendication 1, caractérisée en ce que le mélange des quatre luminophores comprend :
a) un premier composant de luminophore émettant une couleur verte et choisi dans le groupe comprenant l'aluminate de magnésium activé par Tb-Ce, l'aluminate de baryum activé par Eu-Mn, le silicate d'yttrium activé par Tb-Ce, et l'orthophosphate de lanthane activé par Tb-Ce ;
b) un deuxième composant de luminophore émettant une couleur bleue et choisi dans le groupe comprenant l'aluminate de magnésium baryum activé par Eu, le chlorophosphate de strontium activé par Eu, et le chlorophosphate de calcium baryum strontium activé par Eu;
c) un troisième composant de luminophore émettant une couleur rouge et choisi dans le groupe comprenant l'oxyde de gadolinium activé par Eu, et l'oxyde d'yttrium activé par Eu ; et
d) un quatrième composant de luminophore émettant une couleur bleue verte, qui est du gallate de magnésium activé par du manganèse.

14. Mélange de quatre luminophores approprié pour une utilisation dans une lampe fluorescente selon la revendication 13, comprenant :
a) un premier composant de luminophore émettant une couleur verte et choisi dans le groupe comprenant l'aluminate de magnésium activé par Tb-Ce, l'aluminate de baryum activé par Eu-Mn, le silicate d'yttrium activé par Tb-Ce, et l'orthophosphate de lanthane activé par Tb-Ce ;
b) un deuxième composant de luminophore émettant une couleur bleue et choisi dans le groupe comprenant l'aluminate de magnésium baryum activé par Eu, le chlorophosphate de strontium activé par Eu, et le chlorophosphate de calcium baryum strontium activé par Eu ;
c) un troisième composant de luminophore émettant une couleur rouge et choisi dans le groupe comprenant l'oxyde de gadolinium activé par Eu, et l'oxyde d'yttrium activé par Eu ; et
d) un quatrième composant de luminophore,
**caractérisé en ce que**
le quatrième composant de luminophore est du gallate de magnésium activé par du manganèse.
